# EUROPEAN PATENT APPLICATION

(11) **EP 2 005 833 A1**
(43) Date of publication of application: **24.12.2008**
(21) Application number: 07110584.5
(22) Date of filing: 19.06.2007
(51) Int. Cl.: A23C 13/00, C12G 1/00

(54) **A creamy wine-based beverage and method for producing said beverage**

(71) Applicant: Cooney, Patrick Joseph, County Meath (IE); Duffy, Brian Patrick, County Tipperary (IE)
(72) Inventor: Cooney, Patrick Joseph, County Meath (IE); Duffy, Brian Patrick, County Tipperary (IE)
(74) Representative: McCarthy, Denis Alexis

(57) **Abstract**

A creamy wine-based beverage comprises a mixture of the following ingredients: a blend of dairy vegetable cream base, beet sugar, fermented wine and sodium caseinate, wherein substantially all alcohol content of the beverage is provided by the wine. A method of producing the creamy wine-based beverage is also disclosed.

## Description

The present invention is related generally to the field of creamy wine-based beverages such as a creamy aromatised wine-based drink and in particular to a creamy aromatised wine based drink and especially a creamy aromatised white wine based drink. The present invention also relates to a method for producing a creamy wine-based beverage.

Throughout this specification, the term "creamy aromatised wine-based "drinks" is understood to refer generally to a range of wine-based beverages that can contain the following ingredients:
a creamy base which includes a dairy fat such as dairy cream and/or vegetable fat,
sugar,
wine, preferably white wine and
a water dispersible protein such as Sodium Caseinate or Potassium Caseinate.

Other ingredients such as water, emulsifiers, colouring agents, chelating agents and flavours may also be included.

Wine-based beverages, particularly aromatised wine-based drinks are becoming increasingly more popular on the commercial market.

Recently the European Commission's Directorate has proposed to dramatically alter the rules under which wine based beverages are produced and classified.

It seeks to severely restrict the proportion of spirit alcohol previously allowed in such wine based products and wine-based drinks.

Also there is an Australian Customs & Excise legal requirement that such products shall contain at least 70% wine in their formulation.

The present invention relates to a new method of incorporating increasingly greater amounts of wine into these products. A radical departure from previous processing methods is embodied in this novel technique.

A major technical problem inherent in prior art methods is the removal of tannins, acids, enzymes and other wine compounds which interfere with the chemical stability of wine-based drinks.

### PRIOR ART

A common method of removing the destabilizing compounds, particularly the tannins, was to neutralize the wine with potassium carbonate or sodium carbonate, adding high strength alcohol thus forming a precipitate and filtering out these impurities. As the present invention outlines a method where no distilled alcohol is being used then a radically different system has been devised for overcoming the deleterious effects of those unfavourable wine constituents.

2005/0153014 W.F. Farnham et. al. describes an acidic product pH3 - 5 and the use of pectin and PGA. All of the examples given by Farnham referred to beverages which have been fortified with distilled alcohol. Whereas the present invention relates to beverages produced using fermented wine and without any distilled alcohol. Also the beverage of the present invention differs from the disclosure of Farnham in that the beverage of the present invention is at neutral pH 6 - 8 without the use of pectin or artificial stabilisers.

The present invention provides wine based products specifically at pH 6.8 - 7.0 as the effectiveness of the added tri-sodium citrate is progressively lost at lower pH.

U.S. 4331689 G.A. Shemwell used a protein-free creamer in an acidic type product (his invention was not referring to beverages of wine).

U.S.5066509 M.v.d. Hoven produced low pH examples using medium chain triglycerides to stabilize the emulsions.

Currently, there is no creamy wine-based beverage available for purchase in which the alcohol content is entirely provided by wine (i.e. zero spirits alcohol content).

A known product sold under the Trade Mark, BAILEYS, uses cream and alcohol together in a manner sufficiently stable to allow commercial distribution. The alcohol contains spirits alcohol including Irish whiskey. The cream and alcohol are homogenized to form an emulsion, with the aid of an emulsifier containing refined vegetable oil. This process prevents separation of the alcohol and cream during storage. The quantity of other ingredients used is not known but they include chocolate, vanilla, caramel and sugar. No preservatives are required, the alcohol alone is used to preserve the cream.

It is an aim of the present invention to seek to provide a creamy aromatised wine-based drink which will provide a similar taste and mouthfeel to the consumer as the product using spirits alcohol including whiskey for the alcohol content, together with cream, except that in the beverage of the present invention, 100% alcohol content is provided by wine, which is not fortified with spirits alcohol.

There are several technical problems associated with relying entirely on wine as the alcoholic ingredient in the creamy beverage of the present invention since the alcoholic strength of the wine would generally be understood as not being strong enough to deliver the 14-15% v/v alcohol content in the finished creamy wine-based beverage product.

In addition, "tannins" (derived from grape skins, seeds and stems) affect the wine's taste. Additional tannins can come from the chemicals in wood if the wine has been barrel aged in the winery. Tannins have a bitter flavour and can interfere with the taste of a creamy wine-based beverage especially in the case of the present invention since the beverage is relying entirely on wine to provide its alcohol content.

Furthermore, fermented wine tends to be highly acidic (pH 2-3). This high acidity would also be perceived in the art as being a significant technical problem in providing a stable emulsion that would provide a creamy wine-based beverage with the required high standard of taste and creamy mouthfeel of that delivered by the beverage of the present invention.

In addition, in the present invention, 70% v/v of the beverage is comprised of wine and therefore there is only the remaining 30% v/v of the beverage allowed for the other ingredients which must provide the required taste and mouthfeel.

It is the object of the present invention to seek to address the aforementioned technical problems.

Accordingly, the present invention provides a creamy wine-based beverage comprising a mixture including the following ingredients: a creamy base including dairy fat and/or non-dairy fat; sugar and wine, wherein substantially all alcohol content of the beverage is provided by the wine.

The function of the creamy base is to deliver a creamy mouthfeel in the final product.

In one embodiment, the creamy base comprises 90% dairy fat and 10% non-fat solids. In an alternative embodiment, the creamy base comprises fat from soya bean oil, coconut oil, palm oil and/or vegetable oil. In a further alternative embodiment, the creamy base comprises a blend of dairy fat and vegetable fat.

Preferably, in the creamy wine-based beverage of the present invention, the wine is a fermented wine. In accordance with the present invention, the creamy wine-based beverage comprises alcohol provided entirely by wine, preferably fermented wine. No spirit alcohol nor distilled alcohol is included.

Most preferably, the wine used is a fermented white wine.

Ideally, the creamy wine-based beverage of the invention includes at least 70% v/v wine.

The dairy fat can be included as a blend of dairy ingredients. Alternatively, any suitable non-dairy source known to a person skilled in the art can also be used, for example, a vegetable milk/fat blend.

The dairy fat included in the creamy wine-based beverage may be a dairy cream base derived from a dairy milk source. Alternatively, non-dairy fat may be included and the non-dairy fat may be vegetable fat.

In accordance with the invention, the method for producing the creamy wine-based beverage provides a stable emulsion system, thereby producing the creamy wine-based beverage of the present invention.

Advantageously, the wine and other ingredients are blended together in a ratio of 7:3 respectively.

Preferably, the sugar is derived from sugar beet.

Ideally, the wine is from fully fermented grape.

Advantageously, the creamy wine-based beverage of the invention further includes an ingredient functioning as a protein barrier between the fat molecules of the (creamy base) provided by the dairy fat or non-dairy fat and the wine. Ideally, the protein barrier is a water dispersible protein such as sodium caseinate.

It is preferable for the creamy wine-based beverage of the present invention to comprise a mixture of the following ingredients: a blend of dairy based ingredients, sugar derived from sugar beet, a fermented wine.

The present invention has the advantage that it provides a creamy aromatised wine-based drink product which complies with Australian legislation and proposed European legislation which requires that such products contain at least 70% v/v wine in their formulation.

Advantageously, the creamy wine-based beverage further includes ingredients selected from the following group: dextrose, natural flavours, caramel colour, emulsifier, sequestering agent and water.

Ideally, the sequestering agent is tri-sodium citrate.

Advantageously, the ingredients are combined to form a creamy wine-based beverage, specifically a creamy aromatised wine-based drink.

Preferably, the creamy aromatised wine-based drink includes the following combination of ingredients: Dairy Cream base, Fermented Wine, Beet Sugar, Dextrose, Natural Flavour, Emulsifier, Caramel Colour, Tri-sodium citrate and Water and Sodium Caseinate.

This ensures that the beverage of the present invention meets the definition of a creamy aromatised 100% wine-based drink. That is to say the alcohol content is derived entirely (100%) from wine.

Advantageously, in one embodiment, the ingredients of the creamy aromatised wine-based drink are present in the following percentages ranges:

| | |
|---|---|
| Dairy cream base | 13% v/v |
| | |
| Sugar (from sugar beet) | 12% ± 1.8% w/v |
| | |
| Fermented wine | 70% v/v |
| | |
| Dextrose or other sweetener | 2% w/v |
| | |
| Sodium Caseinate | 2.0% ± 1.5% w/v |
| | |
| Natural Flavour | 0.5% v/v |
| | |
| Emulsifier | 0.2% w/v |
| | |
| Caramel Colour | 0.3% ± 0.03% v/v |
| | |
| Tri-sodium citrate | 0.1% ± 0.01 % w/v |

where v/v means volume of the ingredient expressed as a percentage of the overall volume of creamy aromatised wine-based drink produced and w/v means weight of the ingredient expressed as a percentage of the overall volume of creamy aromatised wine-based drink produced.

In another aspect of the invention, there is also provided a method for preparing creamy aromatised wine-based drink, the method comprising the steps of:
a) adding a first predetermined volume of fermented wine to a first mixing tank and adding a second predetermined volume of fermented wine to a second mixing tank;
b) dissolving a first set of ingredients in the fermented wine of the first mixing tank to form a solution where the first set of ingredients comprises sugar and then blending a dairy cream derived from a dairy milk source into the solution in the first mixing tank;
c) adding a second set of ingredients, into the fermented wine in the second mixing tank, where the second set of ingredients comprises fermented wine and then mixing the ingredients in the second mixing tank;
d) adjusting the pH of the mixture of the second mixing tank to a value between 6.7 and 7;
e) combining the contents of the first mixing tank and the second mixing tank and blending the respective mixtures together to form the wine-based creamy beverage.
   Preferably, the mixture of the first mixing tank is combined with the mixture of the second mixing tank.
   Ideally, the method also includes the following additional steps:
f) homogenising the blended mixture;
g) measuring the particle size of the homogenised mixture;
h) repeating steps (f) and (g) until a pre-determined particle size is achieved.
i) transferring the creamy aromatised wine-based drink to a suitable container (usually a bottle).

Preferably, between Step (b) and Step (c), the mixture in the first mixing tank is pasteurised and between Step (e) and Step (f), the blended mixture is passed through a heat exchanger.

Ideally, when producing the creamy wine-based beverage of the present invention, the wine used is fermented wine.

The volume of creamy aromatised wine-based drink to be produced determines the exact quantity of fermented wine added to the two mixing tanks. Ideally, the quantity of fermented wine in the first and second mixing tank is approximately 30% and 40%, respectively, of the overall volume of creamy aromatised wine-based drink produced.

Advantageously, there is an agitator in each mixing tank which when switched on enables fermented wine and all additional ingredients to be mixed together.

It is preferable that the contents of both tanks be heated. Ideally, the first tank is heated to 60°C, whilst the second tank is heated to 40°C.

Ideally, sodium caseinate, wheat gluten, dextrose and tri-sodium citrate are added to the first tank via a mixing vessel and the ingredients dissolved in the heated fermented wine. It is preferable to then add the emulsifier such as sodium stearyl lactylate, which also dissolves in the solution. Advantageously the dairy based blend is slowly blended into the mixture within the first tank.

Ideally, the quantity of each ingredient in the first mixing tank is within the following range relative to the overall volume of creamy aromatised wine-based drink produced;

The quantities of the sodium caseinate wheat gluten, sugar, tri-sodium citrate, dairy base are represented as percentages of the overall volume of creamy aromatised wine-based drink produced.

| | |
|---|---|
| Fermented Wine | 30% v/v |
| | |
| Sodium Caseinate | 2% w/v |
| | |
| Sugar | 6% w/v |
| | |
| Tri-sodium citrate | 0.1% ± 0.01% w/v |
| | |
| Dairy base | 13% v/v |

Once the ingredients have been added to the first mixing tank, the ingredients are mixed by the agitator to form an emulsified mixture. The emulsified mixture is pasteurised within the mixing tank by mixing for 30 minutes at 65°C.

Advantageously, a syrup mixture is formed in the second mixing tank by adding sugar, fermented wine, caramel colouring and natural flavour to the heated fermented wine. The quantities of each of the ingredients are determined as a percentage of the overall quantity of creamy aromatised wine-based drink produced. Ideally the quantity of each ingredient added to the second tank is within the following range relative to the overall volume of creamy aromatised wine-based drink produced;

| | |
|---|---|
| Fermented Wine | 40% v/v |
| | |
| Sugar | 6% w/v |
| | |
| Caramel colouring | 0.3% v/v |
| | |
| Natural Flavouring | 0.5% v/v |

Preferably, in the creamy aromatised wine-based drink of the present invention, the fermented wine is included in a concentration of 70% v/v.

Ideally, the natural flavours used originate from natural sources and are not artificially synthesised. It is preferable for the natural flavours to comply with US regulations as set out by the Tax and Trade Bureau of the United States Department of Treasury (TTB).

Ideally, the pH of the syrup mixture is checked after mixing the ingredients together. Advantageously the pH of the syrup mixture is between 6.7 and 7, if the syrup mixture is too acidic, i.e. if the pH of the syrup mixture is less than 6.7, it is preferable to add sodium hydroxide solution to a 30% concentration to the syrup mixture in order to increase the pH value to within a pH range of 6.7 to 7. Advantageously the pH of the syrup mixture is checked after each addition of the sodium hydroxide solution. It is preferable for the syrup mixture to be continuously cycled through the mixing tank back into the main storage tank.

Advantageously, the syrup mixture is then slowly blended with the pasteurised mixture in the first tank. The rate at which the two mixtures are combined is carefully controlled as the rate of mixture is directly connected with the stability of the fat molecules in solution. If the syrup mixture is added too quickly the fermented wine within the syrup mixture breaks down and the protein barrier which is formed by the sodium caseinate around the fat nodules. When the protein barrier breaks down the fat nodules coalesce and fall out of solution resulting in a two-phase solution. Ideally, blending is performed through a 100 micron size blender.

Ideally, the blended mixture is passed through a heat exchange process and subsequently through a homogeniser at approximately 5,000 litres per hour. It is preferable for the blended mixture to be homogenised in two stages.

Ideally, in the first stage the blended mixture is passed through finely set valves with 1 micron orifices at a pressure of 750 psi, during the second stage the mixture passes through a second set of valves with the pressure increased to 4,000 psi. Advantageously, a sample of the blended mixture is extracted intermediate the two stages and at the end of the second stage in order to measure the particle size of the homogenised mixture. If the particle size is too large, the particles could fall out of the solution causing the mixture to congeal. Ideally the particles should be less than 1 micron in diameter.

Advantageously, a sample of the blended mixture is passed through a series of quality control checks, where the product is checked for stability, organoleptic characteristics and alcoholic strength. Advantageously once the blended mixture successfully completes these checks the batch of blended mixture from which the sample was extracted is chilled to a temperature of 12°C ± 2°C to improve longevity of the product.

The method of the invention will now be described by way of example only, with reference to the accompanying drawing in which,

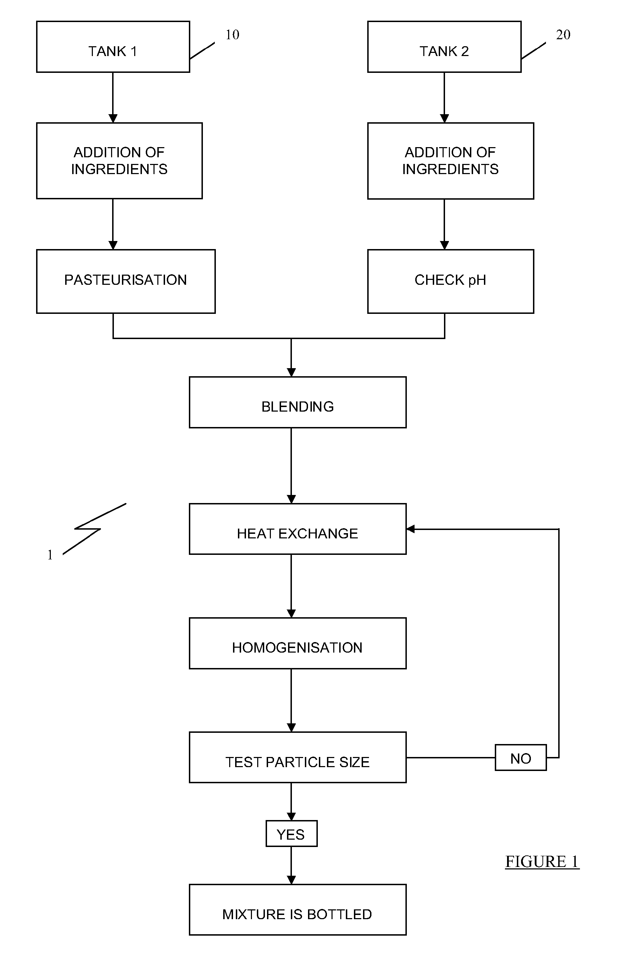

Figure 1 is a flow diagram outlining the stages involved in the method of making a creamy aromatised wine-based drink.

In the following examples, the individual quantities of the component ingredients added to the first tank 10 and the second tank 20 are expressed as w/v (weight/volume) or v/v (volume/volume) percentage of the overall volume of creamy aromatised wine-based drink produced.

The wine used in the following examples is fermented white wine, which is a high alcohol strength wine of approximately 19% alcohol content.

### EXAMPLE 1

### Production of creamy aromatised wine based drink

### Mixing in the first Tank (10)

30% v/v fermented wine is added to the first tank 10 and this is then heated 60°C with continuous stirring. The ingredients are then added in the following order: 2% w/v sodium caseinate, 6% w/v Sugar and 0.1 % w/v tri-sodium citrate. These are mixed together before adding the emulsifier, 0.3% w/v sodium stearyl lactylate, 13% dairy base comprising 90% dairy fat and 10% non-fat solids. Once all the ingredients have been added to the first tank 10 the mixture is pasteurised by heating at 65°C for 30 minutes.

### Mixing in the second Tank (20)

40% v/v fermented wine is added to the second tank 20 and is heated to 40°C with continuous stirring. A syrup mixture is formed by addition of the following ingredients into the fermented wine; 10.5% w/v Sugar, 0.5% v/v natural flavouring and 0.3% v/v Caramel Colour. After the addition of these ingredients, the mixture is thoroughly stirred and the pH is checked. The pH of the mixture should be between 6 and 7. If the mixture is too acidic i.e. the pH level is less than 6, a quantity of 30% w/w sodium hydroxide solution is added in a series of aliquots. The pH level is checked after each addition, once the pH level is between 6 and 7, no further additions of sodium hydroxide solution are made.

The fermented wine added into the first and second tank is to be completed to help insure that there is uniform stabilisation thus avoiding separation of the component ingredients after mixing. The fermented wine is passed through a filtering system to remove all wine acids and tannins from the fermented wine in particular ions [Ca 2+]. The sequestering agent is used to sequester any remaining [Ca 2+] ions in the system. Removal of the [Ca 2+] ion is essential, as otherwise the [Ca 2+] ions will coalesce and degrade the fat molecules of the dairy cream source.

### Blending

The mixtures of tanks 10 and 20 respectively are then blended together through a 100 micron blender. The syrup mixture of tank 20 is added to the mixture of tank 10. The rate at which the two mixtures are mixed together is constant in an effort to help prevent the component ingredients of both mixtures from separating while blending or a later stage when the creamy aromatised wine-based drink is being stored.

### Heat Exchange and Homogenisation

The blended mixture is passed through a heat exchange apparatus and a homogeniser at a rate of approximately 5,000 Litres per hour. Generally the homogenisation process is carried out in two stages and in both stages, the mixture is passed through a set of valves. Each set of valves has orifices, which are 1 micron in diameter. In the first stage, the mixture passes through the valves at a pressure of 750 psi and subsequently during the second stage the mixture passed through the valves at a pressure of 4,000 psi. The particle size may be tested intermediate the two homogenisation stages.

### Particle Size Test

At the end of the second homogenisation stage, a sample or a number of samples of the mixture is/are extracted. The particles are then size tested i.e. the diameter of the particles are measured. The diameter of the particles should be less than one micron, if they are larger the particles may fall out of the solution immediately causing the solids to congeal at the bottom of the tank or in the future after the product has been bottled.

If the diameter of the particles of the mixture is less than 1 micron at the particle size test stage, the mixture is then ready to be transferred into bottles at the bottling stage. Alternatively if the diameter of the particles of the mixture is greater than 1 micron the mixture is returned to the heat exchange stage and proceeds through the heat exchange process and the homogenisation process until the particles are the correct size.

Once the product has successfully passed the particle size test, a number of other quality control tests are undertaken to ensure the product is of the correct standard. Once these tests are complete the product is chilled to 12°C to improve longevity of the product.

### Example 2

**Production of creamy aromatised wine-based drink**

| Ingredients: | 1^{st} tank | 2^{nd} tank |
|---|---|---|
| | | |
| Fermented Wine | 30.0% | 40.0% |
| | | |
| Sodium Caseinate | 2.0% | -- |
| | | |
| Sugar | 7.4% | 10.5% |
| | | |
| Tri-sodium citrate | 0.1% | -- |
| | | |
| Sodium stearyl lactylate | 0.3% | -- |
| | | |
| Dairy base | 9.0% | -- |
| | | |
| Water | -- | -- |
| | | |
| Natural flavouring | -- | 0.5% |
| | | |
| Caramel colour | -- | 0.2% |

The method of production of the creamy aromatised wine-based drink is the same as described in Example 1.

### Example 3

| Ingredients: | 1^{st} tank | 2^{nd} tank |
|---|---|---|
| | | |
| Fermented Wine | 30.0% | 30.0% |
| | | |
| Sodium Caseinate | 2.0% | -- |
| | | |
| Sugar | 8.0% | 10.0% |
| | | |
| Tri-sodium citrate | 0.1% | -- |
| | | |
| Sodium stearyl lactylate | 0.3% | -- |
| | | |
| Dairy base | 11.0% | -- |
| | | |
| Water | 7.8% | -- |
| | | |
| Natural flavouring | -- | 0.5% |
| | | |
| Caramel colour | -- | 0.3% |

The method of production of the creamy aromatised wine-based drink is the same as described in Example 1.

### Example 4

| Ingredients: | 1^{st} tank | 2^{nd} tank |
|---|---|---|
| | | |
| Fermented Wine | 25.0% | 25.0% v/v |
| | | |
| Sodium Caseinate | 2.0% | -- |
| | | |
| Sugar | 10.0% | 10.0% |
| | | |
| Tsc | 0.1 % | -- |
| | | |
| Ssi | 0.3% | -- |
| | | |
| Dairy base | 13.0% | -- |
| | | |
| Water | 13.7% | -- |
| | | |
| Natural flavouring | -- | 0.5% |
| | | |
| Caramel colour | -- | 0.4% |
| | | |

The method of production of the creamy aromatised wine-based drink is the same as described in Example 1.

The product formulation of each of the above Examples, achieves stability, taste and creamy mouthfeel to meet consumer requirements.

It will understood that the invention is not limited to the specific details described herein, which are given by way of example only, and that various modifications and alterations are possible without departing from the scope of the invention as defined in the appended claims.

## Claims

1. A creamy wine-based beverage comprising the following ingredients: a creamy base including a dairy fat and/or vegetable fat, sugar, and wine wherein substantially all alcohol content of the beverage is provided by the wine.

2. A creamy wine-based beverage as claimed in claim 1, wherein all the alcohol content of the beverage is provided by wine.

3. A creamy wine-based beverage as claimed in Claim 1 or Claim 2 wherein the wine-based creamy beverage is formed from a blend of fermented wine and a dairy base which includes dairy fat.

4. A creamy wine-based beverage as claimed in any preceding claim, wherein the sugar is derived from sugar beet.

5. A creamy wine-based beverage as claimed in any one of the preceding claims wherein the wine is a fermented wine.

6. A creamy wine-based beverage as claimed in any one of the preceding claims, wherein an ingredient functioning as a protein barrier is included to provide a protein barrier between the fat molecules of the diary base and the fermented wine.

7. A creamy wine-based beverage as claimed in Claim 6, wherein the protein barrier is provided by a water dispersible protein, preferably sodium caseinate.

8. A creamy wine-based beverage as claimed in any one of the preceding claims, wherein the wine-based creamy beverage further includes ingredients selected from the following group: dextrose, natural flavour, caramel colour, emulsifier, sequestering agent and water.

9. A creamy wine-based beverage as claimed in claim 8, wherein the sequestering agent is tri-sodium citrate.

10. A creamy wine-based beverage as claimed in any one of the preceding claims, wherein the ingredients are combined to form a creamy aromatised wine-based drink.

11. A creamy wine-based beverage as claimed in Claim 10, wherein the ingredients of the wine-based creamy beverage are present in the following percentage range:
| | |
|---|---|
| Anhydrous Milk Fat/Vegetable Fat | 13.0% ± 0.5% v/v |
| | |
| Sugar (from sugar beet) | 12% ± 1.8% w/v |
| | |
| Fermented wine | 70% v/v |
| | |
| Dextrose | 2% ± 0.5% w/v |
| | |
| Sodium Caseinate | 2.0% ± 1.5% w/v |
| | |
| Natural Flavour | 0.5% ± 0.07% v/v |
| | |
| Emulsifier | 0.2% ± 0.03% w/v |
| | |
| Caramel Colour | 0.3% ± 0.03% v/v |
| | |
| Tri-sodium citrate | 0.1% ± 0.01 % w/v |
Where v/v means volume of the ingredient expressed as a percentage of the overall volume of creamy wine-based beverage produced and w/v means weight of the ingredient expressed as a percentage of the overall volume of creamy aromatised wine-based drink.

12. A creamy wine-based beverage as claimed in Claim 10, wherein the ingredients of the wine-based creamy beverage are present in the following percentages:
| | |
|---|---|
| Dairy/Vegetable Fat | 13.0% v/v |
| | |
| Sugar (from sugar beet) | 12% w/v |
| | |
| Fermented wine | 70% v/v |
| | |
| Dextrose | 2% w/v |
| | |
| Sodium Caseinate | 2.0% w/v |
| | |
| Natural Flavour | 0.5% v/v |
| | |
| Emulsifier | 0.2% w/v |
| | |
| Caramel Colour | 0.3% v/v |
| | |
| Tri-sodium citrate | 0.1 % w/v |
Where v/v means volume of the ingredient expressed as a percentage of the overall volume of wine-based creamy beverage produced and w/v means weight of the ingredient expressed as a percentage of the overall volume of creamy aromatised wine-based drink.

13. A creamy wine-based beverage as claimed in any one of claim 1 to claim 9, wherein the ingredients are combined to form a creamy aromatised wine-based drink.

14. A method for preparing a creamy aromatised wine-based drink, the method comprising the steps of:
a) adding a first predetermined volume of fermented wine to a first mixing tank and adding a second predetermined volume of fermented wine to a second mixing tank;
b) dissolving a first set of ingredients in the fermented wine in the first mixing tank to form a solution, where the first set of ingredients comprises sugar and then blending a dairy / vegetable base formed from a dairy / vegetable milk source into the solution in the first mixing tank;
c) adding a second set of ingredients, into the fermented wine in the second mixing tank, where the second set of ingredients includes fermented wine and then mixing the ingredients in the second mixing tank;
d) adjusting the pH of the mixture of the second mixing tank to a pre-determined value;
e) combining the blended mixture of the first mixing tank with the mixture of the second mixing tank and blending the respective mixtures together to form the creamy aromatised wine-based drink:

15. A method as claimed in Claim 17 wherein the method includes the following additional steps;
f) homogenising the creamy wine-based beverage mixture formed at step (e);
g) measuring the particle size of the homogenised creamy wine-based beverage mixture;
h) repeating steps (f) and (g) until a predetermined particle size is achieved for the wine-based creamy beverage mixture; and
i) transferring the creamy wine-based beverage to a suitable container.

16. A method as claimed in Claim 14 where between Step (a) and Step (b), the mixture in the first mixing tank is pasteurised.

17. A method as claimed in Claim 14 and Claim 15 where between Step (e) and Step (f) the blended mixture is passed through a heat exchanger.

18. A method as claimed in Claim 14 wherein at step (d), the pH of the syrup mixture of the second mixing tank is adjusted until a pH range of between 6.7 and 7 is achieved.

19. A method as claimed in Claim 14, wherein the pH of the syrup mixture is adjusted by the addition of sodium hydroxide solution until a pH range between 6.7 and 7 is achieved.

20. A method as claimed in any one of Claims 17 to 19, wherein the first set of ingredients further comprised an ingredient, such as wheat gluten, functioning as a protein barrier, a sequestering agent such as tri-sodium citrate and an emulsifier such as sodium stearyl lactylate.

21. A method as claimed in any one of Claim 17 to 20 wherein the creamy wine-based beverage is formed from a blend of fermented wine and dairy / vegetable base.
